# FASCICULE DE BREVET EUROPEEN

(11) **EP 2 911 768 B1**
(45) Date de publication et mention de la délivrance du brevet: **04.07.2018**
(21) Numéro de dépôt: 13779261.0
(22) Date de dépôt: 18.09.2013
(51) Int. Cl.: B01D 53/86, E21B 41/00

(54) **PROCÉDÉ POUR ÉLIMINER L'OXYGÈNE D'UN FLUX GAZEUX COMPRENANT DU CO2**
VERFAHREN ZUR ENTFERNUNG VON SAUERSTOFF AUS EINEM CO2-HALTIGEN GASSTROM
METHOD FOR REMOVING OXYGEN FROM A GAS FLOW COMPRISING CO2

(30) Priorité: 25.10.2012 FR 1260181
(43) Date de publication de la demande: 02.09.2015
(73) Titulaire: L'Air Liquide Société Anonyme pour l'Etude et l'Exploitation des Procédés Georges Claude, 75007 Paris (FR)
(72) Inventeur: CHAMBRON, Nicolas, F-94130 Nogent Sur Marne (FR); DARDE, Arthur, F-75005 Paris (FR); DUBETTIER-GRENIER, Richard, F-94210 La Varenne Saint Hilaire (FR); LECLERC, Mathieu, F-75020 Paris (FR)
(74) Mandataire: Laigneau, Amandine
(86) Numéro de dépôt international: PCT/FR2013/052147
(87) Numéro de publication internationale: WO 2014/064350

(56) Documents cités:
- EP-A1- 0 952 111
- EP-A2- 2 404 656
- FR-A1- 2 751 561
- FR-A1- 2 971 169
- US-A- 4 816 237

## Description

La présente invention concerne un procédé pour éliminer l'oxygène d'un flux gazeux comprenant au moins 45% de dioxyde de carbone, plus particulièrement plus de 80% de dioxyde de carbone. L'invention s'applique particulièrement à la purification d'un flux gazeux issu d'un procédé d'oxycombustion, plus particulièrement d'un procédé d'oxycombustion sous pression comprise entre 10 et 50 bar, comprenant une teneur en de l'ordre du pourcent, de préférence inférieure à 10%.

Les changements climatiques constituent l'un des plus grands défis environnementaux. L'accroissement de la concentration en dioxyde de carbone dans l'atmosphère est en très grande partie la cause du réchauffement global. Le CO₂ d'origine humaine est essentiellement émis dans l'atmosphère par la combustion des combustibles fossiles dans les centrales thermiques.

Les centrales thermiques permettent par combustion de combustibles de dégager de la chaleur utilisable pour produire de la vapeur d'eau et éventuellement de l'énergie mécanique ou électrique. Les fumées de combustion dégagent des quantités importantes de CO₂ dans l'atmosphère.

Pour assurer la purification du courant gazeux riche en CO2, en vue principalement de son enfouissement ou encore de son utilisation pour de l'EOR (Enhanced Oil Recovery = Récupération Assistée du pétrole), il convient notamment de réduire la teneur en oxygène à des valeurs de l'ordre du ppm(v). Pour ce faire, on emploie généralement soit une étape de purification chimique (de type lavage aux amines, Rectisol...par exemple), soit une étape de séparation/purification cryogénique (comprenant notamment une colonne de distillation).

Les procédés actuellement utilisés pour purifier un courant gazeux en CO2 permettent non seulement de réduire la teneur en oxygène à des basses valeurs, mais permettent également la purification d'autres impuretés, telles que par exemple, le monoxyde de carbone, l'argon, l'azote...
Le document FR 2 971 169 décrit un procédé de purification en oxygène d'un flux gazeux d'alimentation comprenant entre 15 et 60 % de CO₂ et entre 0,1 et 10 % d'oxygène, ledit procédé comprenant :
a) Une étape d'oxydation catalytique du lux gazeux d'alimentation en présence de méthane et d'hydrogène, et
b) Une étape de récupération d'un flux gazeux appauvri en oxygène.
Le document US 4 816 237 décrit une installation de purification d'un flux gazeux d'alimentation, l'installation comprenant :
i) Un réchauffeur pour chauffer le flux gazeux d'alimentation à une température jusqu'à 600° C,
ii) Un premier réacteur d'oxydation catalytique permettant la combustion de l'oxygène du flux gazeux réchauffé,
iii) Un second réacteur d'oxydation catalytique permettant la combustion de l'oxygène du flux gazeux issu du premier réacteur d'oxydation catalytique,
iv) Une unité de récupération de chaleur permettant de récupérer la chaleur de réaction du flux gazeux sortant du second réacteur d'oxydation catalytique, et
v) Un module de dessication (21) permettant de sécher le flux gazeux sortant de l'unité de récupération de chaleur.
Dans le cas particulier de l'oxycombustion sous pression, la teneur en oxygène dans le gaz à traiter est inférieure à celle couramment observée dans les fumées d'un procédé d'oxycombustion traditionnel (de l'ordre du % contre 5-10% traditionnellement) et la pureté en CO2 est déjà très élevée : plus particulièrement supérieure à 80%.
Ainsi, la seule purification en oxygène à des teneurs de l'ordre du ppm(v) peut suffire pour atteindre les spécifications requises sur le CO2 produit, en vue de son enfouissement ultérieur ou de son utilisation pour de l'EOR (Enhanced Oil Recovery = Récupération Assistée du pétrole) par exemple.

Partant de là, un problème qui se pose est de fournir un procédé amélioré de purification d'un flux gazeux d'alimentation comprenant au moins 45% de CO2.

Une solution de la présente invention est un procédé de purification en oxygène d'un flux gazeux d'alimentation (1) comprenant au moins 45% de CO2 et moins de 10% d'oxygène, ledit procédé comprenant :
a) une étape d'oxydation catalytique (3, 4) du flux gazeux d'alimentation en présence d'un combustible, le combustible étant le méthane et l'hydrogène, et
b) une étape de récupération d'un flux gazeux (7) appauvri en oxygène,
avec l'étape d'oxydation catalytique réalisée dans une unité d'oxydation catalytique comprenant deux réacteurs en séries :
- un premier réacteur (3) comprenant un premier lit catalytique et mettant en oeuvre un premier combustible, et
- un deuxième réacteur (4) comprenant un second lit catalytique et mettant en oeuvre un second combustible.
avec le premier combustible étant du méthane et le second combustible étant de l'hydrogène.

Utiliser une étape d'oxydation catalytique pour éliminer l'oxygène du courant gazeux à traiter permet non seulement de valoriser la chaleur du courant sortant de la centrale oxycombustion (en intégrant l'étape d'oxydation catalytique directement sur le courant chaud), mais également de valoriser la pression de ce même courant, dans le cas notamment d'une oxycombustion sous pression (à une pression comprise entre 10 et 50 bars), où le courant gazeux à traiter est à une pression supérieure à la pression atmosphérique, ce qui permet d'alléger ensuite la compression du CO2 purifié, en vue de son enfouissement ou de son utilisation pour des applications EOR (Enhanced Oil Recovery) par exemple.

Selon le cas la présente invention peut présenter une ou plusieurs des caractéristiques suivantes :
- la concentration en oxygène dans ledit flux gazeux d'alimentation 1 est inférieure à 5 %, de préférence inférieure à 2 % ;
- la concentration en CO2 dans ledit flux gazeux d'alimentation 1 est supérieure à 45%, de préférence supérieur à 80%
- l'eau produite pendant l'étape a) d'oxydation catalytique 3, 4 est éliminée dans un module de dessiccation 6;
- l'étape a) d'oxydation catalytique 3, 4 est réalisée à une température comprise entre 100°C et 800°C. En effet, selon le catalyseur et le gaz combustible choisi (et donc la température opératoire requise), le flux gazeux d'alimentation doit être préchauffé ou non, en fonction de son intégration et de sa température en sortie de la centrale d'oxycombustion,
- le gaz combustible est le méthane et l'hydrogène ; le méthane (gaz peu onéreux) ne permet pas de descendre à des teneurs en oxygène inférieures au millier de ppm(v) voir à la centaine de ppm(v) à cause du risque de reformage du méthane, tandis que l'hydrogène (gaz plus onéreux) permet quant à lui d'atteindre le ppm(v) en oxygène.
- l'étape d'oxydation catalytique 3, 4 est réalisée dans une unité d'oxydation catalytique comprenant un lit catalytique, constitué d'un catalyseur, typiquement une matrice à base d'aluminium activé avec du palladium et/ou du platine.
Dans le cas de l'utilisation de deux réacteurs en séries, le second réacteur pourra être opéré à la température de sortie du premier réacteur.
- le flux gazeux récupéré en sortie du premier réacteur présente une concentration en oxygène comprise entre 1500 et 100ppm(v), préférentiellement entre 1000 et 500ppm(v);
- le flux gazeux récupéré en sortie du deuxième réacteur 4 présente une concentration en oxygène inférieure à 100ppm(v), de préférence inférieure à 1ppm(v)
- le flux gazeux récupéré à l'étape b) a une température comprise entre 800°C et 100°C, plus particulièrement entre 600°C et 200°C et ledit procédé comprend en aval de l'étape b) une étape c) de récupération de la chaleur 5. L'étape a) d'oxydation catalytique est une étape exothermique et le flux gazeux d'alimentation qui était à une température comprise entre 100°C et 800°C, a vu sa température augmentée au cours de l'étape a). Cette récupération de chaleur peut permettre de préchauffer de l'eau d'alimentation de chaudière (Boiler Feed Water) par exemple, mais peut également servir à préchauffer le gaz à traiter en amont du premier réacteur si la température requise est supérieure à la température en sortie de la centrale oxycombustion ;
- le flux gazeux d'alimentation 1 est un flux de fumées d'oxy-combustion, préférentiellement d'oxycombustion à une pression comprise entre 10 et 50 bar.
Notons que dans le cas où une purification plus poussée serait nécessaire (notamment concernant les autres impuretés présentes dans le gaz à traiter), une unité de purification cryogénique pourra être utilisée en aval de l'étape d'oxydation catalytique.

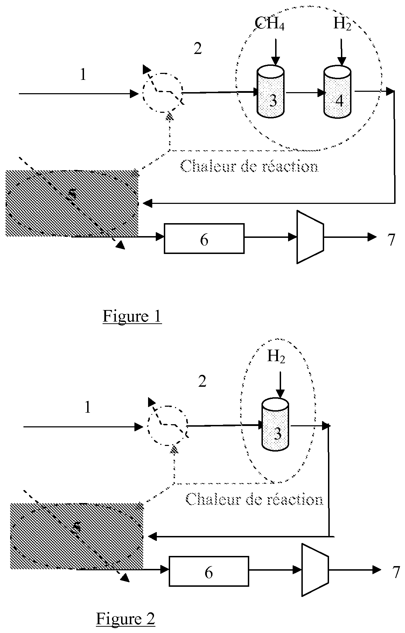

L'invention va maintenant être décrite plus en détail à l'aide des figures 1 et 2.

La figure 1 schématise un procédé selon l'invention dans lequel l'unité d'oxydation catalytique comprend un premier réacteur comprenant un premier lit catalytique et un deuxième réacteur comprenant un deuxième lit catalytique. Le flux gazeux d'alimentation 1 est éventuellement réchauffé dans un échangeur de chaleur 2 (en fonction de sa température de sortie de la centrale oxycombustion et de la température requise dans le premier réacteur) à une température comprise entre 400°C et 500°C (pour le cas présent utilisant le méthane dans le premier réacteur). Le flux gazeux éventuellement réchauffé pénètre dans le premier réacteur 3 d'oxydation catalytique dans lequel le combustible utilisé est du méthane. Ce premier réacteur 3 permet d'obtenir une concentration en oxygène de l'ordre de 1000 ppm(v). Ainsi cette première étape d'oxydation catalytique permet de s'affranchir du problème de cracking du méthane (reformage du méthane) qui peut avoir lieu lorsque la température devient trop élevée, ce qui apparait notamment lorsque la teneur en oxygène est inférieur à 1000ppm(v) voir à la centaine de ppm(v). Le flux gazeux pénètre ensuite dans le second réacteur 4 d'oxydation catalytique dans lequel le combustible utilisé est de l'hydrogène. L'hydrogène est un gaz combustible qui permet d'obtenir une concentration en oxygène de l'ordre du ppm(v). Le flux gazeux appauvri en oxygène est ensuite introduit dans une unité de récupération de chaleur 5, par exemple un échangeur pour alimenter le réseau vapeur, ou encore un échangeur qui permet de profiter de la chaleur de réaction pour préchauffer le gaz entrant dans le premier réacteur d'oxydation catalytique, avant de subir une étape de séchage 6 visant à éliminer l'eau produite lors de l'étape d'oxydation catalytique. Aussi, la présence de l'unité de récupération de chaleur peut permettre d'envisager le cas où après amorçage des réactions catalytiques, l'échangeur de chaleur 2 n'est plus utilisé et le flux gazeux entrant dans le premier réacteur est uniquement réchauffé au moyen de l'unité de récupération de chaleur 5. Enfin, le flux gazeux peut éventuellement subir plusieurs étapes de traitement avant d'être comprimé et récupéré. Le flux gazeux 7 ainsi récupéré comprend plus de 90% de CO2.

La figure 2 schématise un procédé dans lequel l'unité d'oxydation catalytique comprend un seul réacteur comprenant un lit catalytique et mettant en oeuvre de l'hydrogène comme combustible. Le flux gazeux d'alimentation 1 est éventuellement réchauffé dans un échangeur de chaleur 2 (en fonction de sa température de sortie de la centrale oxycombustion et de la température requise dans le premier réacteur) à une température comprise entre 90°C et 150°C (pour le cas présent utilisant l'hydrogène dans le premier réacteur). Le flux gazeux réchauffé pénètre alors dans le réacteur 3 d'oxydation catalytique. L'hydrogène est un gaz combustible efficace et permet d'obtenir une concentration en oxygène de l'ordre du ppm(v). Le flux gazeux appauvri en oxygène est ensuite introduit dans une unité de récupération de chaleur 5, par exemple un échangeur pour alimenter le réseau vapeur, ou encore un échangeur qui permet de profiter de la chaleur de réaction pour préchauffer le gaz entrant dans le réacteur 3 d'oxydation catalytique, avant de subir une étape de séchage 6 visant à éliminer l'eau produite lors de l'étape d'oxydation catalytique. Aussi, la présence de l'unité de récupération de chaleur peut permettre d'envisager le cas où après amorçage des réactions catalytiques, l'échangeur de chaleur 2 n'est plus utilisé et le flux gazeux entrant dans le premier réacteur est uniquement réchauffé au moyen de l'unité de récupération de chaleur 5. Enfin, le flux gazeux peut éventuellement subir plusieurs étapes de traitement avant d'être comprimé et récupéré. Le flux gazeux 7 ainsi récupéré comprend plus de 90% de CO2.

## Revendications

1. Procédé de purification en oxygène d'un flux gazeux d'alimentation (1) comprenant au moins 45% de CO2 et moins de 10% d'oxygène, ledit procédé comprenant :
a) une étape d'oxydation catalytique (3, 4) du flux gazeux d'alimentation en présence d'un combustible, le combustible étant le méthane et l'hydrogène, et
b) une étape de récupération d'un flux gazeux (7) appauvri en oxygène,
avec l'étape d'oxydation catalytique réalisée dans une unité d'oxydation catalytique comprenant deux réacteurs en séries :
- un premier réacteur (3) comprenant un premier lit catalytique et mettant en oeuvre un premier combustible, et
- un deuxième réacteur (4) comprenant un second lit catalytique et mettant en oeuvre un second combustible.
avec le premier combustible étant du méthane et le second combustible étant de l'hydrogène

2. Procédé selon la revendication 1, **caractérisé en ce que** la concentration en oxygène dans ledit flux gazeux d'alimentation est inférieure à 10 %, de préférence inférieure à 5%.

3. Procédé selon l'une des revendications 1 ou 2, **caractérisé en ce que** la concentration en CO2 dans ledit flux gazeux d'alimentation (1) est supérieure à 45%, de préférence supérieur à 80%.

4. Procédé selon l'une des revendications 1 à 3, **caractérisé en ce que** l'eau produite pendant l'étape a) d'oxydation catalytique est éliminée dans un module de dessiccation (6).

5. Procédé selon l'une des revendications 1 à 4, **caractérisé en ce que** l'étape a) d'oxydation catalytique (3, 4) est réalisée à une température comprise entre 100°C et 800°C.

6. Procédé selon l'une des revendications 1 à 5, **caractérisé en ce que** l'étape d'oxydation catalytique (3, 4) est réalisée dans une unité d'oxydation catalytique comprenant un lit catalytique, constitué d'un catalyseur à base de palladium et de platine.

7. Procédé selon l'une des revendications 1 à 6, **caractérisé en ce que** le flux gazeux récupéré en sortie du premier réacteur (3) présente une concentration en oxygène comprise entre 1500 et 100ppm(v), préférentiellement entre 1000 et 500ppm(v)

8. Procédé selon l'une des revendications 1 à 7, **caractérisé en ce que** le flux gazeux récupéré en sortie du deuxième réacteur (4) présente une concentration en oxygène inférieure à 100ppm(v), de préférence inférieure à 1ppm(v)

9. Procédé selon l'une des revendications 1 à 8, **caractérisé en ce que** le flux gazeux récupéré à l'étape b) a une température comprise entre 800°C et 100°C, plus particulièrement entre 600°C et 200°C, et ledit procédé comprend en aval de l'étape b) une étape c) de récupération de la chaleur (5).

10. Procédé selon l'une des revendications 1 à 9, **caractérisé en ce que** le flux gazeux d'alimentation est un flux de fumées d'oxycombustion, préférentiellement d'oxycombustion à une pression comprise entre 10 et 50 bar.

## Patentansprüche

1. Verfahren zur Reinigung von Sauerstoff aus einem zugeführten Gasstrom (1), der mindestens 45 % CO₂ und weniger als 10 % Sauerstoff umfasst, wobei das Verfahren umfasst:
a) einen Schritt einer katalytischen Oxidation (3, 4) des zugeführten Gasstroms in Gegenwart eines Brennstoffs, wobei es sich beim Brennstoff um Methan und Wasserstoff handelt, und
b) einen Schritt der Gewinnung eines sauerstoffarmen Gasstroms (7),
wobei der Schritt der katalytischen Oxidation in einer Einheit zur katalytischen Oxidation erfolgt, die zwei Reaktoren in Reihe umfasst:
- einen ersten Reaktor (3), der ein erstes Katalysatorbett umfasst und einen ersten Brennstoff verwendet, und
- einen zweiten Reaktor (4), der ein zweites Katalysatorbett umfasst und einen zweiten Brennstoff verwendet,
wobei es sich beim ersten Brennstoff um Methan und beim zweiten Brennstoff um Wasserstoff handelt.

2. Verfahren nach Anspruch 1, **dadurch gekennzeichnet, dass** die Sauerstoffkonzentration im zugeführten Gasstrom weniger als 10 %, vorzugsweise weniger als 5 % beträgt.

3. Verfahren nach einem der Ansprüche 1 oder 2, **dadurch gekennzeichnet, dass** die CO₂-Konzentration im zugeführten Gasstrom (1) mehr als 45 %, vorzugsweise mehr als 80 % beträgt.

4. Verfahren nach einem der Ansprüche 1 bis 3, **dadurch gekennzeichnet, dass** das im Schritt a) der katalytischen Oxidation erzeugte Wasser in einem Trocknungsmodul (6) entfernt wird.

5. Verfahren nach einem der Ansprüche 1 bis 4, **dadurch gekennzeichnet, dass** der Schritt a) der katalytischen Oxidation (3, 4) bei einer Temperatur zwischen 100 °C und 800 °C erfolgt.

6. Verfahren nach einem der Ansprüche 1 bis 5, **dadurch gekennzeichnet, dass** der Schritt der katalytischen Oxidation (3, 4) in einer Einheit zur katalytischen Oxidation erfolgt, die ein Katalysatorbett umfasst, das aus einem Katalysator auf der Basis von Palladium und Platin besteht.

7. Verfahren nach einem der Ansprüche 1 bis 6, **dadurch gekennzeichnet, dass** der am Ausgang des ersten Reaktors (3) gewonnene Gasstrom eine Sauerstoffkonzentration zwischen 1500 und 100 ppm(v), vorzugsweise zwischen 1000 und 500 ppm(v) aufweist.

8. Verfahren nach einem der Ansprüche 1 bis 7, **dadurch gekennzeichnet, dass** der am Ausgang des zweiten Reaktors (4) gewonnene Gasstrom eine Sauerstoffkonzentration von weniger als 100 ppm(v), vorzugsweise weniger als 1 ppm(v) aufweist.

9. Verfahren nach einem der Ansprüche 1 bis 8, **dadurch gekennzeichnet, dass** der in Schritt b) gewonnene Gasstrom eine Temperatur zwischen 800 °C und 100 °C, noch mehr bevorzugt zwischen 600 °C und 200 °C aufweist und das Verfahren stromabwärts von Schritt b) einen Schritt c) zur Wärmerückgewinnung (5) umfasst.

10. Verfahren nach einem der Ansprüche 1 bis 9, **dadurch gekennzeichnet, dass** es sich beim zugeführten Gasstrom um einen Strom von Rauchgasen der Oxy-Verbrennung, vorzugsweise einer Oxy-Verbrennung bei einem Druck zwischen 10 und 50 bar, handelt.

## Claims

1. Method for purifying with oxygen, a gas supply flow (1) comprising at least 45% CO₂ and less than 10% oxygen, said method comprising:
a) a step of catalytically oxidising (3, 4) the gas supply flow in the presence of a fuel, the fuel being methane and hydrogen, and
b) a step of recovering a gas flow (7) deprived of oxygen,
with the catalytic oxidation step carried out in a catalytic oxidation unit comprising two reactors in series:
- a first reactor (3) comprising a first catalytic bed and implementing a first fuel, and
- a second reactor (4) comprising a second catalytic bed and implementing a second fuel,
with the first fuel being methane and the second fuel being hydrogen.

2. Method according to claim 1, **characterised in that** the oxygen concentration in said gas supply flow is less than 10%, preferably less than 5%.

3. Method according to one of claims 1 or 2, **characterised in that** the CO₂ concentration in said gas supply flow (1) is more than 45%, preferably more than 80%.

4. Method according to one of claims 1 to 3, **characterised in that** the water produced during step a) of catalytic oxidation is removed in a desiccation module (6).

5. Method according to one of claims 1 to 4, **characterised in that** step a) of catalytic oxidation (3, 4) is carried out at a temperature of between 100°C and 800°C.

6. Method according to one of claims 1 to 5, **characterised in that** step a) of catalytic oxidation (3, 4) is carried out in a catalytic oxidation unit comprising a catalytic bed, constituted of a palladium and platinum-based catalyst.

7. Method according to one of claims 1 to 6, **characterised in that** the gas flow recovered exiting the first reactor (3) has an oxygen concentration of between 1500 and 100ppm(v), preferably between 1000 and 500ppm(v).

8. Method according to one of claims 1 to 7, **characterised in that** the gas flow recovered exiting the second reactor (4) has an oxygen concentration of less than 100ppm(v), preferably less than 1ppm(v).

9. Method according to one of claims 1 to 8, **characterised in that** the gas flow recovered in step b) has a temperature of between 800°C and 100°C, more specifically between 600°C and 200°C, and said method comprises, downstream of step b), a step c) of recovering the heat (5).

10. Method according to one of claims 1 to 9, **characterised in that** the gas supply flow is a flow of oxycombustion fumes, preferably oxycombustion at a pressure of between 10 and 50 bar.
